# EUROPEAN PATENT APPLICATION

(11) **EP 2 676 581 A1**
(43) Date of publication of application: **25.12.2013**
(21) Application number: 13171695.3
(22) Date of filing: 12.06.2013
(51) Int. Cl.: A47J 31/40

(54) **A beverage preparation device for vending machines**

(30) Priority: 20.06.2012 IT MI20121080
(71) Applicant: F.A.S. International S.p.A., 36015 Schio (Vicenza) (IT)
(72) Inventor: Morabito, Giuseppe, 36014 Santorso VI (IT); Cattaneo, Pietro, 36015 Schio VI (IT)
(74) Representative: Bonvicini, Davide

(57) **Abstract**

A beverage preparation device for vending machines (1) comprises a plurality of containing chambers (2), compacting members (4) and metering members (10) selectively operating on one containing chamber (2) at a time, and designed to draw powder from the containing chambers (2) and deliver it to the compacting members (4), a percolation and/or infusion chamber (20), which is adapted to receive the powder dose pressed by the compacting members (4), feed means (21) which are designed to feed hot water into the percolation and/or infusion chamber (20), and a delivery conduit (22) in fluid communication with the percolation and/or infusion chamber (20) for drawing the liquid prepared in the percolation and/or infusion chamber (20).

## Description

The present invention relates to a beverage preparation device for use in vending machines.

Soluble or infusion powders are used in vending machines for preparation of beverages to be dispensed upon user's request. An example of infusion powder is ground coffee, that is used for preparing espresso. Espresso coffee is a beverage obtained by percolation of pressurized hot water through a layer of ground coffee. As water flows through the ground coffee, its pressure drops and the beverage is dispensed at atmospheric pressure. Due to the particularly fine grinding of roasted coffee and to compaction of the ground powder, the percolation water encounters such a resistance as to allow extraction of aromatic substances that provide creaminess, flavor, body and aftertaste to the beverage.

Different coffee qualities impart different tastes, flavors and organoleptic properties to the beverage. Infinite combinations of tastes and flavors may be obtained by blending together different coffee qualities. The various types of blends may be also treated to extract the caffeine content from coffee, to obtain decaffeinated coffee.

Each consumer has his/her own preferences in terms of taste of the prepared beverage; modem vending machines must provide at least the selection between "normal" and decaffeinated coffee.

On the other hand, soluble powders are used in vending machines to prepare beverages having the taste of chocolate, milk, milk and chocolate and the like. Soluble powders are mixed with hot water to be dissolved therein and provide the beverage.

Also in this case, an infinite number of possible combinations of soluble powders exist, to obtain a wide range of beverage types.

It will be understood from the above that vending machines must be able to store various types of powders to prepare different types of beverages, such that the requirements of a plurality of users can be met.

For this purpose, vending machines are known to be equipped with a plurality of powder dose dispensers, each having a containing chamber for a type of powder and metering members for drawing a powder dose required for the preparation of a beverage from the containing chamber, as well as a beverage preparation device. The metering members usually consist of an electric motor that rotates an auger plunging in the containing chamber and leading to a powder compacting device. As the auger rotates, powder is drawn from the containing chamber and sent to the compacting device, which compacts the powder to prepare them for delivery to a percolation/infusion chamber for beverage preparation.

Prior art powder dose dispensers for use in vending machines for beverage preparation have a few drawbacks.

Although a large space is available for the dispensers in the vending machine, it still cannot accommodate a large number of dispensers. This is because the dimensions of a dispenser are given both by the powder containing chamber and by the metering members which, amongst other things, must be connected in parallel to the percolation/infusion chamber for beverage preparation.

Furthermore, the manufacturing cost of each dispenser has a non-negligible incidence on the global manufacturing cost of the vending machine, as the metering members require an electric motor for each containing chamber (note that the containing chambers are usually made of a plastic material that is suitable for storage of food products and have negligible manufacturing cost, as compared with the metering members).

Furthermore, difficulties are encountered in coupling the powder dose dispensers to the beverage preparation device.

In the light of the above described prior art, the object of the present invention is to provide a beverage preparation device for use in vending machines for beverage preparation, that can obviate the above drawbacks.

This object is fulfilled by a beverage preparation device for use in vending machines as defined in claim 1.

Further features and advantages of the beverage preparation device for use in vending machines of this invention will be apparent upon reading the following description of one preferred embodiment thereof, which is given by way of illustration and without limitation with reference to the accompanying figures, in which:
- Figure 1 is a schematic perspective view of beverage preparation device according to the present invention,

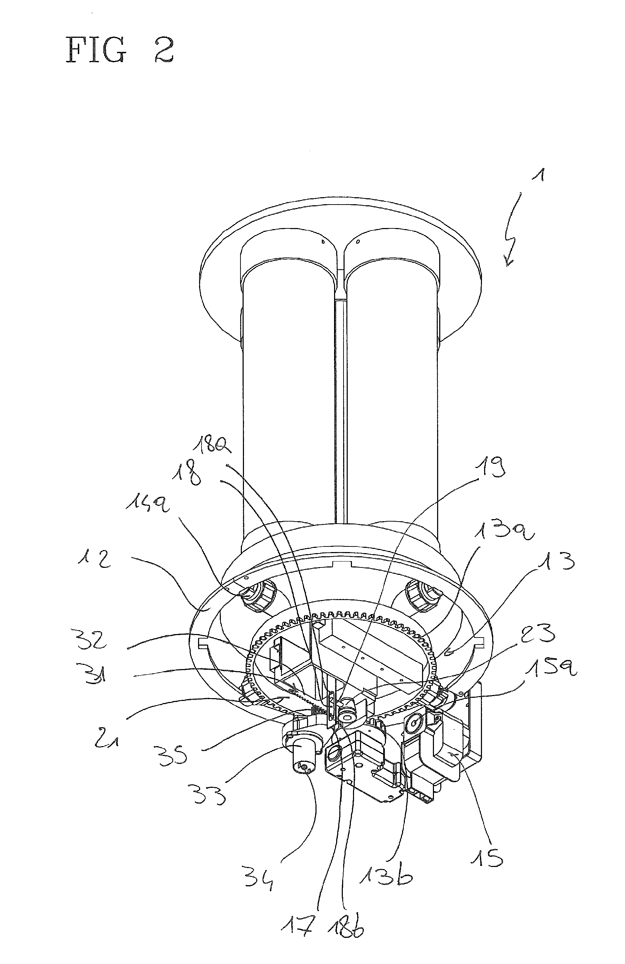

- Figure 2 is a different schematic perspective view of the device of Figure 1,

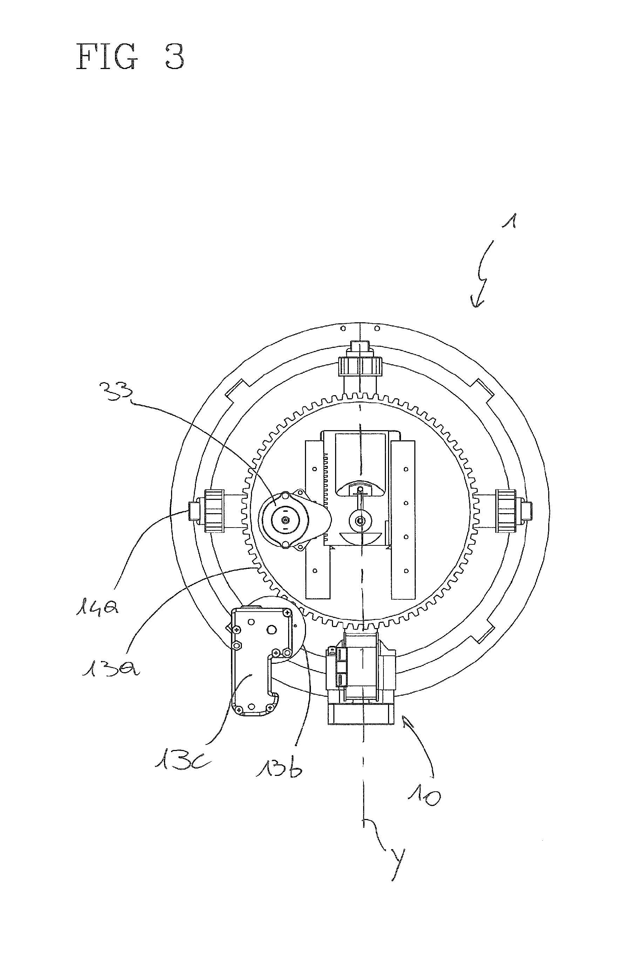

- Figure 3 is a schematic plan view of the device of Figure 1,
- Figures 4 to 8 show sectional views of the device of Figure 1 in different operating positions.

A beverage preparation device for use in vending machines according to the present invention will be generally designated by numeral 1.

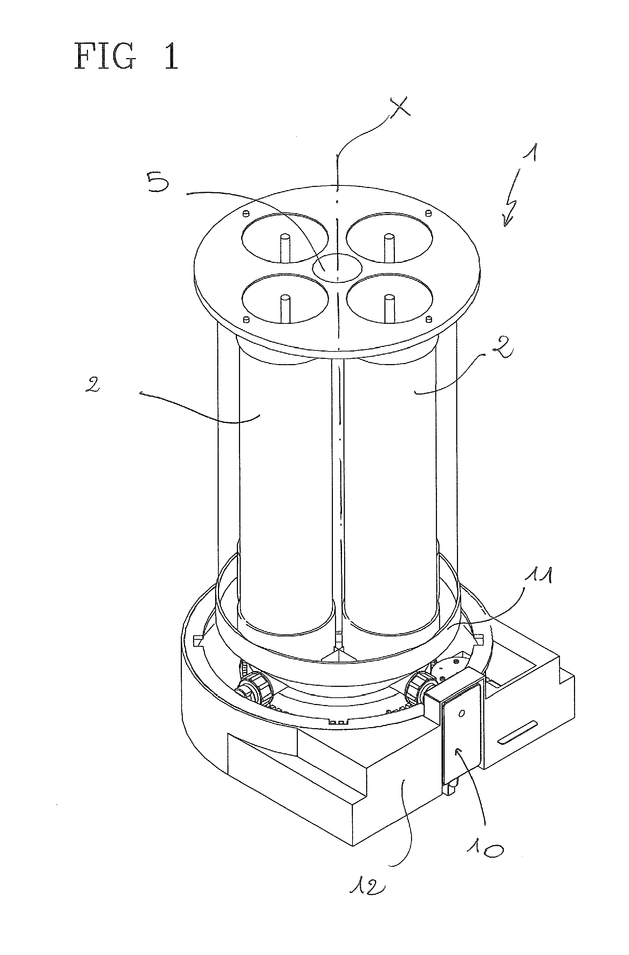

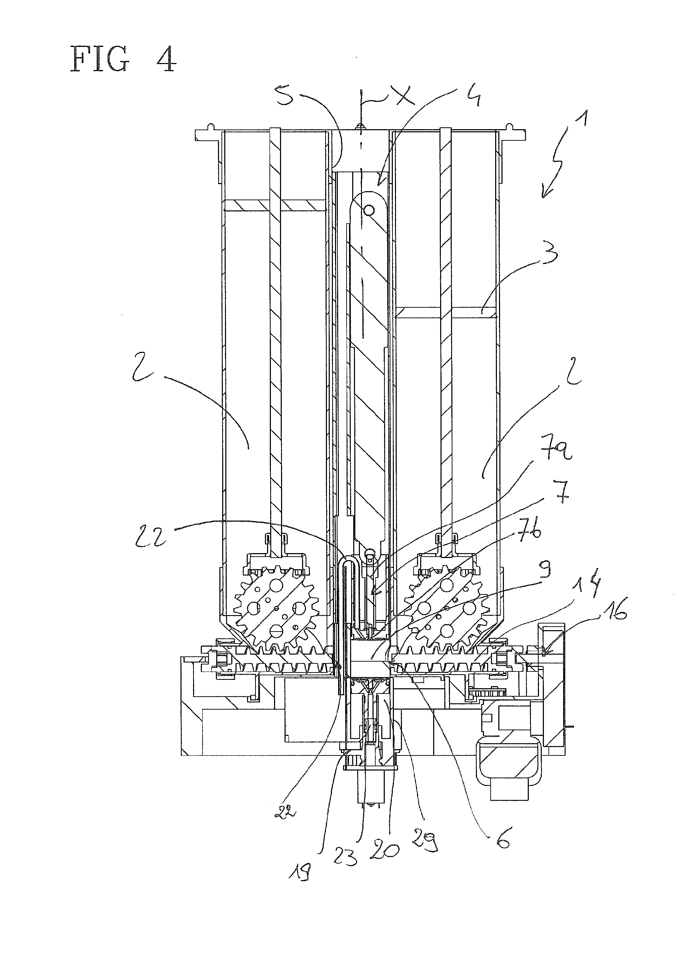

The device 1 comprises a plurality of distinct containing chambers 2, containing infusion and/or percolation powdered products. An example of infusion powder is ground coffee, which is used for coffee preparation, and an example of mixing powder is powdered milk or chocolate. The containing chambers 2 are distinct in that each of them is adapted to store powder, but the powder of one chamber cannot spread over or mix with the powder contained in another chamber. Preferably, there are at least two containing chambers. In the preferred embodiment of the invention, there are four containing chambers 2, as shown in Figure 1. The containing chambers 2 have a prismatic shape and are preferably formed as sectors of a cylinder, in side-by-side arrangement to form a cylinder. As used herein, a cylindrical shape is intended as a substantially cylindrical shape, i.e. a shape resembling a cylinder; in other words, the above mentioned cylindrical shape shall not be necessarily intended in a strict geometric sense. All the containing chambers 2 are designed to be rotated about the same axis of rotation X. It shall be noted that the axis of rotation X is external to all the containing chambers 2, which means that it does not extend through the chambers 2. Each chamber 2 has its own top cover 3 (see Figure 4) which slides in the chamber 2, and particularly slides in a direction parallel to the axis X. Each top cover 3 always substantially contacts the surface of the powder contained in the chamber 2, and lowers as the surface of the powder lowers. This will both prevent foreign matter from entering the containing chamber 2, and allow the powder to be less exposed to air, for improved preservation of their organoleptic properties. Preferably, the containing chambers 2 are made of a food-grade plastic material.

The device 1 also comprises compacting members 4, which are designed to press a powder dose from one of the containing chambers 2 (as explained below) to form a pressed powder dose, i.e. a pellet, to be transferred to a percolation and/or infusion chamber 20 for beverage preparation. The compacting members 4 comprise a cylinder 5, surrounded by the containing chambers 2. The cylinder 5 is stationary and the containing chambers 2 rotate relative to it. Particularly, the cylinder 5 acts as a stationary guide for rotation of the chambers 2. The cylinder 5 has a longitudinal axis that coincides with the axis of rotation X of the chambers 2. The cylinder 5 has an aperture 6 in the proximity of the bottom of the chambers 2, for selective fluid communication of each containing chamber 2 with the interior of the cylinder such that powder doses can be transferred thereto. It shall be noted that the cylinder 5 has a single aperture 6 for powder admission. The cylinder 5 defines a compaction chamber 9 at an end portion thereof.

The compacting members 4 further comprise a piston 7, which is adapted to slide in the cylinder 5 to compact the powder transferred to the compaction chamber 9. Particularly, the compacting piston 7 is movable in the direction defined by the axis of rotation X and has a stem 7a and a head 7b.

The movement of the compacting piston 7 is obtained by drive means (not shown), e.g. of electric or fluid-dynamic type.

The device 1 further comprises metering members 10 selectively operating on one containing chamber 2 at a time, and designed to draw powder from the containing chambers 2 and deliver it to the compacting members 4. Particularly, the metering members 10 are designed to draw powder from the containing chambers 2 and deliver it to the compaction chamber 9, where the compacting members 4 are designed to compact the powder dose.

The metering members 10 and the containing chambers 2 are adapted to move relative to each other such that the metering members 10 selectively face a single containing chamber. In the preferred embodiment of the invention, the containing chambers 2 are designed to rotate and the metering members 10 are stationary. For this purpose, the device 1 comprises a storage base 11 from which the containing chambers 2 extend. The storage base 11 is designed to rotate about the above mentioned axis of rotation X relative to a support frame 12 for the metering members 10. The support base 12 supports both the metering members 10 and the storage base 11. The storage base 11 has a substantially circular shape, with drive members 13 operating to rotate it. In the preferred embodiment of the invention, the drive members 12 comprise a ring 13a extending over the entire circumference of the storage base 11. The ring 13a is mechanically connected to a pinion 13b having seats mating with the teeth of the ring 13a, such that the rotation of the pinion 13b causes the rotation of the storage base 11 about the axis of rotation X. The pinion 13b is rotatably mounted to a motor 13c which is fixed to the support frame 12.

Each containing chamber 2 has a screw feeder 14 therein, which extends through the entire containing chamber 2 in a direction Y perpendicular to the axis of rotation X. Particularly, each screw feeder 14 extends from the peripheral wall of the storage base 11 to the wall of the cylinder 5, level with the aperture 6. The first end of the auger 14, i.e. the end at the perimeter wall of the storage base 11, is equipped with a bushing 14a, which is designed to receive a rotating shaft in mechanical connection therewith. As the screw feeder 14 is rotated, it conveys the powder contained in the containing chamber 2 toward the aperture 6 of the compacting members 4. Here, each auger 14 is selectively engaged by the metering members 10, which transfer amounts of motion to the auger 14 to rotate it.

The metering members 10 comprise an electric motor 15 having a drive shaft 15a which is mechanically connected to a transmission member 16. The transmission member 16 is movable relative to the drive shaft for connection to and disconnection from each auger 14. Particularly, the transmission member 16 is designed for mechanical connection to the bushing 14a of the screw feeder 14. The mobility of the transmission member 16, i.e. its movement to and from the screw feeder 14 is provided by any mechanical or electromechanical device capable of moving the transmission member. An exemplary device that can be used to move the transmission member 16 is the clutch system of a starter motor of the type that is used in automobiles. As the containing chambers 2 are rotated, a bushing 14a of a given chamber 2 is carried in front of the transmission member 16. As the latter is moved and connected to the bushing 14a, the screw feeder 14 is actuated, and pushes the powders into the cylinder 5, namely in the compaction chamber 9, through the aperture 6.

The device 1 further comprises feed means 21 which are designed to feed hot water into the percolation and/or infusion chamber 20 and a delivery conduit 22 in fluid communication with the percolation and/or infusion chamber 20 for drawing the liquid prepared in said percolation and/or infusion chamber 20.

According to one embodiment, the feed means 21 comprise a feeding piston 23 located on the side of the compaction chamber 9 facing away from the compacting piston 7.

For hot water to be supplied into the percolation and/or infusion chamber 20, the feeding piston 23 comprises an inlet connection 24 for connection to the hot water feeding circuit of a vending machine and a plurality of feed holes 25 connected to the inlet connection 24 and designed to feed hot water into the percolation and/or infusion chamber 20.

Here, the feeding piston 23 comprises a stem 26 and a head 27 connected to the stem 26. The head 27 has feed holes 25, whereas the stem 26 has the inlet connection 24.

Advantageously, the feeding piston 23 is movable in the direction of the axis of rotation X within a cylinder 29 in which the percolation and/or infusion chamber 20 is formed.

Here, preloaded elastic means 28 are provided, to maintain the feeding piston 23, particularly its head 27, in a compaction position. In this position, the head 27 of the feeding piston 23, the inner walls of the cylinder 5 and the head 7a of the compacting piston 7 delimit the compaction chamber 9.

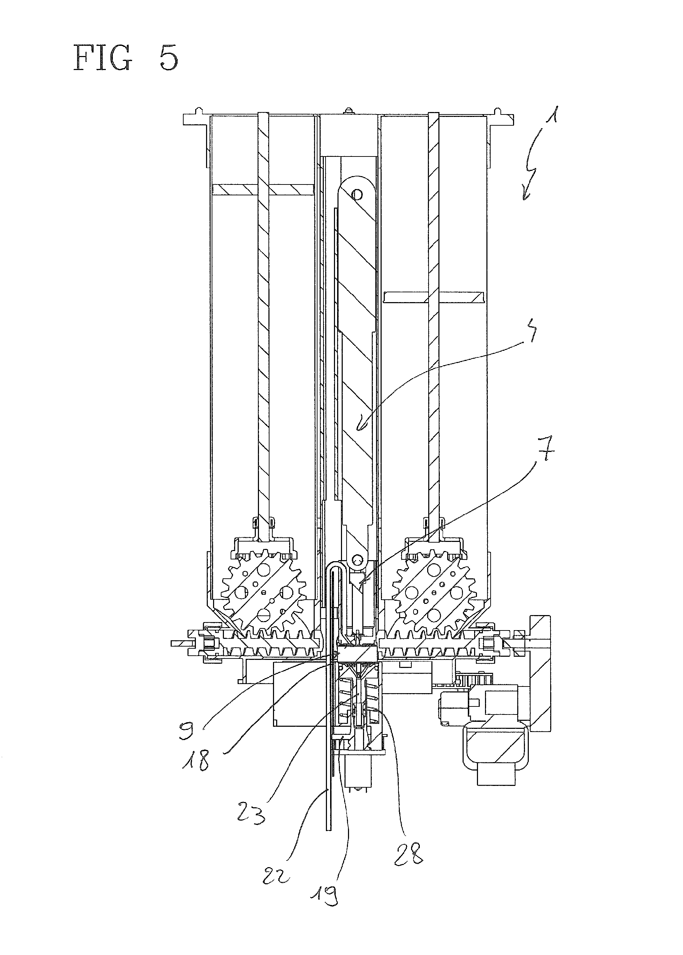

Therefore, the compacting piston 7 is designed to move from a closed position of the cylinder 5, in which it seals the cylinder and hence the compaction chamber 9, and an open position of the cylinder in which it allows fluid communication of the interior of the cylinder 5 with the outside environment, by opening the compaction chamber 9. When the powder has been loaded in the compaction chamber 9, the compacting piston 7 is in its lifted position (Figure 4) and the feeding piston 23 is maintained in the compacting position by the elastic means 28. Then, the compacting piston 7 is lowered to the compacting position (Figure 5), and compacts the powders thereby reducing the volume of the compaction chamber 9. Furthermore, the position of the compacting piston 7 defines the volume of the compaction chamber 9 and hence the weight of the compacted powder in grams.

It shall be noted that the aperture 6 in the cylinder 5 faces the compaction chamber 9 when the compacting piston 7 is in its lifted position, and that the aperture 6 is closed by the compacting piston 7 when the latter is in its compacting position.

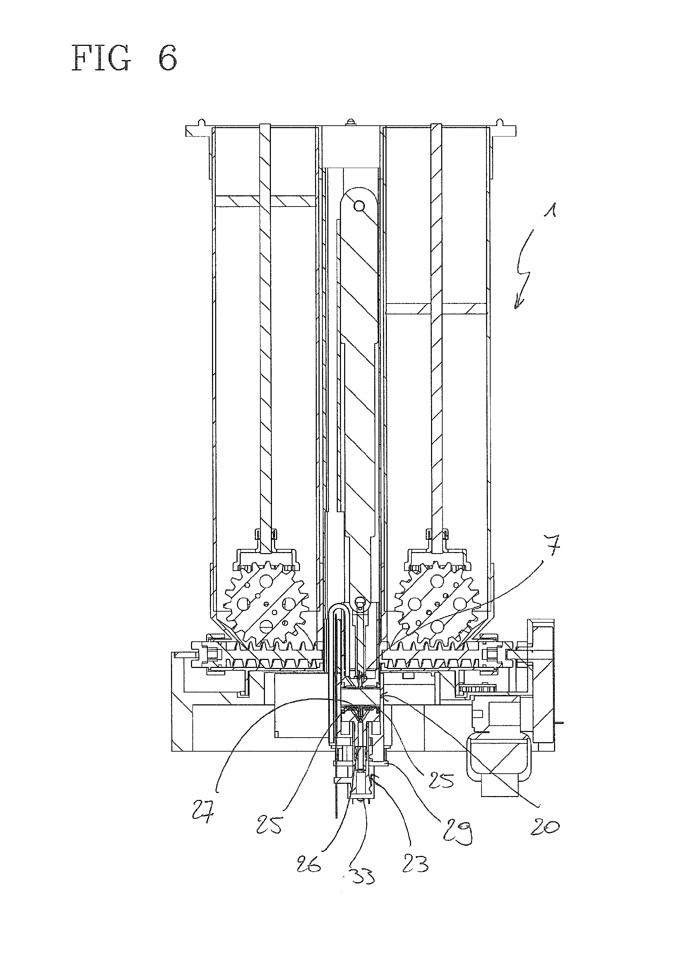

Once the powder has been compacted into a pellet, the compacting piston 7 is further lowered to the beverage preparation position (Figure 6). Likewise, the feeding piston 23 lowers to the beverage preparation position. This movement of the feeding piston 23 may be obtained using electric or fluid-dynamic drive means or advantageously, as shown in the illustrated example, by the action of the compacting piston 7. The latter presses the feeding piston 23 through the pellet, and hence the elastic means 28 that are thus compressed.

In one embodiment, the compacting piston 7 is connected to a rod 17 which extends parallel to the compacting piston 7 in the direction X toward the feeding piston 23. The rod 17 has a slot 18 with two end portions 18a, 18a, with a peg 19 connected to the feeding piston 23 sliding therethrough.

The end portions 18a, 8b of the slot 18 define limit stop positions for the peg 19.

Particularly, as the compacting piston 7 moves from the compacting position to the beverage preparation position, the upper end portion 18a of the slot 18 engages the peg 19 to cooperate with the movement of the feeding piston 23 from the compacting position to the beverage preparation position.

When the compacting piston 7 and the feeding piston 23 are both in the beverage preparation position, the pressed powder dose is in the percolation and/or infusion chamber 20, ready to receive the hot water required for beverage preparation.

Now, hot water may be fed into the percolation and/or infusion chamber 20, thereby allowing delivery of the beverage through the delivery conduit 22 (Figure 6).

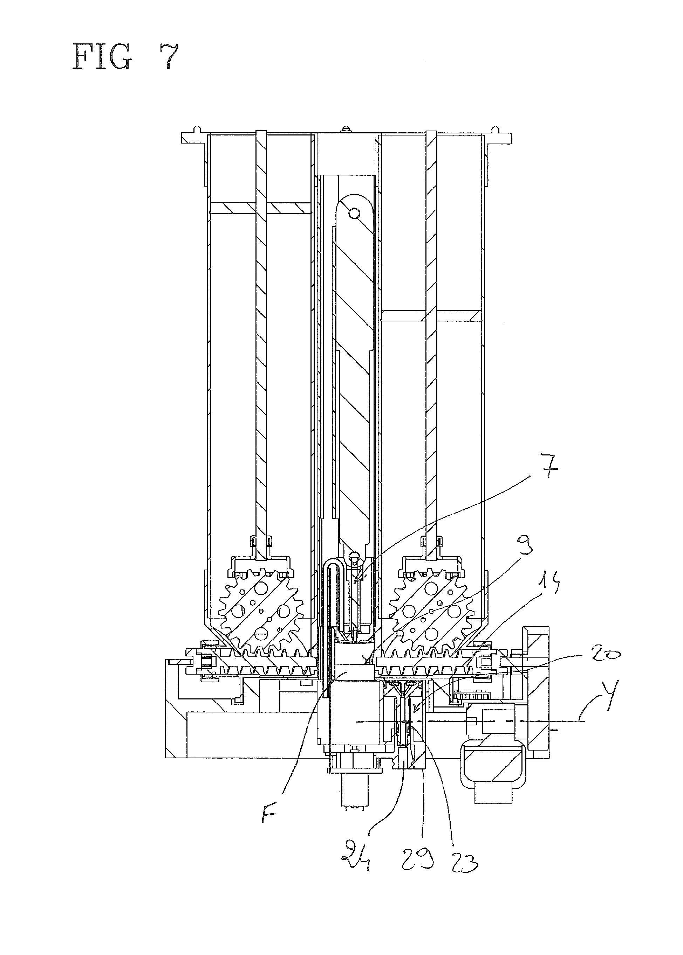

As beverage delivery is completed, the compacting piston 7 is carried to the lifted position (Figure 7) and the feeding piston 23 moves back to the compacting position (Figure 7), in this example by the action of the unloaded elastic means 28 that operate on the feeding pistons 23. Thus, in case of infusion, the bottom F that is used for beverage preparation is moved into the compaction chamber 9.

If the force of the elastic means 28 is not sufficient to move the feeding piston 23 back to the compacting position, it shall be noted that, as the compacting piston 7 moves from the beverage preparation position to the compacting position, the lower end portion 18b of the slot 18 engages the peg 19 to move the feeding piston 23 to the beverage preparation position.

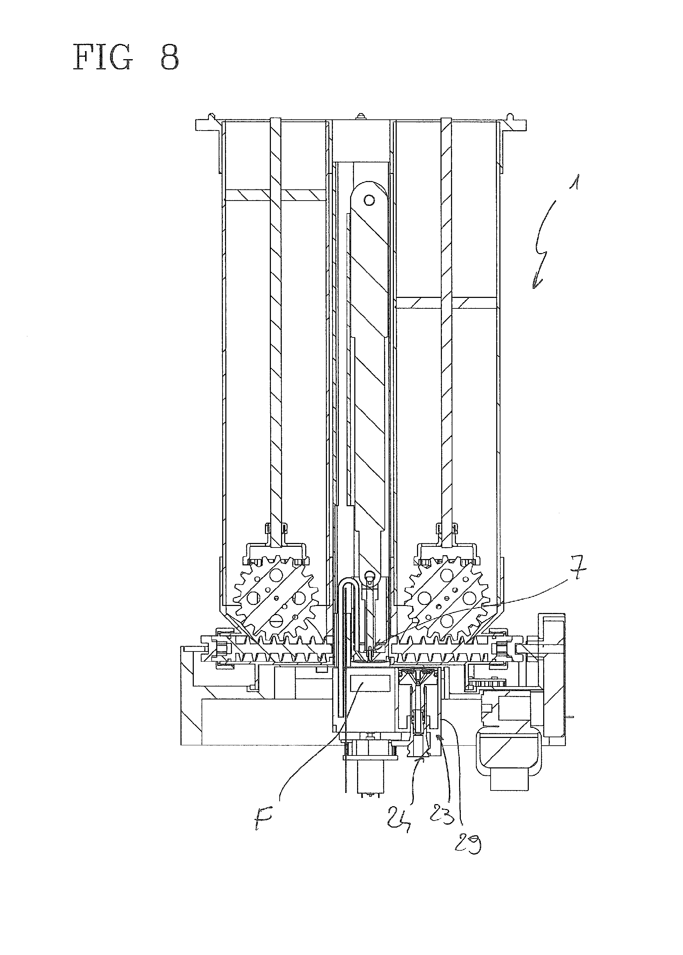

In order to unload the bottom F, the feed means 21 are adapted to move in the direction Y perpendicular to the axis of rotation X. In this example, drive means 31 are provided, which are coupled to the cylinder 29 to move the cylinder 29 in the direction Y until the feeding piston 23 is disengaged from the bottom F, i.e. from the compacting chamber 9, thereby releasing the underlying compaction chamber 9 and allowing the bottom F to fall into a collection area below the device 1 (Figure 8).

In accordance with an embodiment, the drive members 31 comprise a rack 32, integral with the cylinder 29 and extending in the direction Y, and an electric motor 33, fixed to the support frame 12 and having a drive shaft 34 and motion transfer means 35 engaged with the rack 32, to convert the rotation of the drive shaft 34 into a translation of the rack 32, and hence of the feed means 21, in the direction Y.

Those skilled in the art will obviously appreciate that a number of changes and variants may be made to the arrangements as described hereinbefore to meet incidental and specific needs. All of these variants and changes fall within scope of the invention, as defined in the following claims.

## Claims

1. A beverage preparation device for vending machines, comprising:
- a plurality of distinct powder containing chambers (2);
- compacting members (4) for pressing a powder dose,
- metering members (10) selectively operating on one containing chamber (2) at a time, and designed to draw powder from the containing chambers (2) and deliver it to said compacting members (4), said metering members (10) and said containing chambers (2) being movable relative to each other to selectively present one containing chamber (2) at a time to the metering members (10),
- a percolation and/or brewing chamber (20), which is adapted to receive the powder dose pressed by said compacting members (4),
- feed means (21) which are designed to feed hot water into said percolation and/or brewing chamber (20),
- a delivery conduit (22) in fluid communication with said percolation and/or brewing chamber (20) for drawing the liquid prepared in said percolation and/or brewing chamber (20).

2. A device (1) as claimed in claim 1, wherein said compacting members (4) comprise:
- a cylinder (5) defining a compaction chamber (9) at an end portion thereof,
- a compacting piston (7) sliding in said cylinder (5) for compacting the powders in said compaction chamber (9),
said feed means (21) comprising a feeding piston (23) located on the side of said compacting chamber (9) opposite to that of the compacting piston (7).

3. A device (1) as claimed in claim 2, wherein said compacting piston (7) and said feeding piston (23) are movable in a longitudinal direction (X) from a compaction position to a beverage preparation position, to move the pressed powder dose from said compaction chamber (9) to said percolation and/or brewing chamber (20) and vice versa.

4. A device (1) as claimed in claim 3, wherein preloaded elastic means (28) are provided to maintain said feeding piston (23) in the compaction position, the movement of said compacting piston (7) from said compaction position to said beverage preparation position causing compression of said elastic means (28), and the movement of said compacting piston (7) from said beverage preparation position to said compaction position causing said feeding piston (23) to move back to said compaction position due to the action of said elastic means (28).

5. A device (1) as claimed in claim 3 or 4, wherein said feed means (21) and said percolation and/or brewing chamber (20) are movable in a direction (Y) perpendicular to said longitudinal direction (X).

6. A device (1) as claimed in any claim from 1 to 5, wherein said feed means (23) include an inlet connection (24) for connection to a hot water circuit of a vending machine and a plurality of feed holes (25) connected to the inlet connection (24) and designed to feed hot water into the percolation and/or brewing chamber (20).

7. A vending machine comprising a beverage preparation device as claimed in one or more of the preceding claims.
